(19) Europäisches Patentamt / European Patent Office / Office européen des brevets

(11) **EP 3 680 300 A1**

(12) **EUROPEAN PATENT APPLICATION**
published in accordance with Art. 153(4) EPC

(43) Date of publication:
**15.07.2020 Bulletin 2020/29**

(21) Application number: **18851442.6**

(22) Date of filing: **29.08.2018**

(51) Int Cl.:
*C09D 201/00* (2006.01)  *C09D 5/03* (2006.01)
*C09D 7/61* (2018.01)  *C09D 163/00* (2006.01)

(86) International application number:
**PCT/JP2018/031905**

(87) International publication number:
**WO 2019/044886 (07.03.2019 Gazette 2019/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.09.2017 JP 2017169417**

(71) Applicant: **Toagosei Co., Ltd.**
**Minato-ku**
**Tokyo 105-8419 (JP)**

(72) Inventors:
• **NIWA, Makoto**
Nagoya-shi
Aichi 455-0026 (JP)
• **SATO, Takefumi**
Nagoya-shi
Aichi 455-0026 (JP)

(74) Representative: **Becker, Eberhard**
**Becker & Kurig Partnerschaft**
**Patentanwälte PartmbB**
**Bavariastrasse 7**
**80336 München (DE)**

(54) **COMPOSITION FOR POWDER COATING MATERIALS AND COATED ARTICLE**

(57)      Provided are: a composition for powder coating materials, which enables the achievement of a cured film that has excellent thin film smoothness, electrical insulation properties and thermal conductivity; and a coated article. The present invention relates to: a composition for powder coating materials, which contains (A) a thermally conductive filler having an average circularity of 0.92 or more, (B) a thermosetting resin and (C) a curing agent; and a coated article, the surface of which is provided with a cured film that is formed from this composition for powder coating materials. The present invention also relates to a composition for powder coating materials, which additionally contains (D) a dispersant.

**EP 3 680 300 A1**

**Description**

[Technical Field]

The present invention relates to a composition for powder coating materials and a coated article, and the coated article can be used in various industrial product fields such as the electrical and electronic fields, and belongs to these technical fields.

[Background Art]

A powder coating material is a coating material that does not contain volatile components such as an organic solvent, and is for forming a coated film by coating a substrate with only components forming the coated film and melting it. Compared with solvent type coating materials of the related art, powder coating materials have advantages in which a thickness can be obtained with only one application, powder that has not adhered can be recovered to be reused, and there is less waste coating material, and therefore they are widely used currently in various industrial products such as in the electrical, electronic, and communications fields, construction and construction materials fields, automotive and vehicle fields, road materials field, water and gas materials fields, steel furniture field, and construction and industrial machinery fields from the viewpoint of streamlining coating and environmental measures.

As a composition for powder coating materials, epoxy-based, vinyl chloride-based, polyolefin-based, acrylic-based, and polyester-based compositions are known. However, because good electrical insulation properties are required particularly in the electrical and electronic fields, epoxy-based compositions are widely utilized.

In recent years, heat dissipation measures have been emphasized due to an increase in heat generation associated with higher performance and higher power of electrical and electronic devices, and therefore a composition for powder coating materials is not only required to have electrical insulation properties but also have high thermal conductivity.

In the related art, a thermally conductive composition for powder coating materials which contains a thermally conductive filler has been proposed.

Patent Literature 1 discloses a composition for powder coating materials which has electrical insulation properties and thermal conductivity, the composition including epoxy resin, a curing agent for an epoxy resin, and thermally conductive fillers of three kinds having specific thermal conductivities in specific ratios.

Patent Literature 2 discloses a composition for powder coating materials which has thermal conductivity, the composition including an epoxy resin and/or a polyester resin, and a thermal conductive filler having a specific thermal conductivity of 10% by mass or more and 40% by mass or less.

[Reference List]

[Patent Literature]

    Patent Literature 1: Japanese Patent Laid-Open No. 56-79161
    Patent Literature 2: Japanese Patent Laid-Open No. 2014-237805

[Summary of Invention]

[Technical Problem]

However, a cured film formed from the composition disclosed in Patent Literature 1 and Patent Literature 2 has excellent smoothness as a thick film of about 300 $\mu$m, but poor smoothness as a thin film of 200 $\mu$m or less (hereinafter referred to as "thin-film smoothness"), and when it has been applied to electrical and electronic devices with high performance and high power of recent years, there has been a problem of insufficient electrical insulation properties and thermal conductivity.

As described above, it is difficult to satisfy thin-film smoothness, electrical insulation properties, and thermal conductivity requirements of a cured film at the same time.

The present invention has been made in view of the above circumstances, and an objective of the present invention is to provide a composition for powder coating materials that has excellent thin-film smoothness, electrical insulation properties, and thermal conductivity as a cured film.

[Solution to Problem]

As a result of intensive studies to solve the above problems, the inventors of the present invention have found that a cured film obtained from a composition for powder coating materials which contains an epoxy resin, a curing agent, and a thermally conductive filler having a specific average circularity has excellent thin-film smoothness, electrical insulation properties, and thermal conductivity, and therefore have completed the present invention.

The present invention is as follows.

[1] A composition for powder coating materials, including: a component (A): a thermally conductive filler that has an average circularity of 0.92 or more; a component (B): thermosetting resin; and a component (C): curing agent.

[2] The composition for powder coating materials according to [1], in which the component (A) includes thermally conductive fillers of at least two kinds having different average primary particle diameters, and a mass ratio of a thermally conductive filler having a largest average primary particle diameter to a thermally conductive filler having a smallest average primary particle diameter is 1 to 5.

[3] The composition for powder coating materials according to [1] or [2], in which the component (B) is an epoxy resin.

[4] The composition for powder coating materials according to any one of [1] to [3], in which an average primary particle diameter of the component (A) is 1.0 to 40 μm.

[5] The composition for powder coating materials according to any one of [1] to [4], in which a content of the component (A) is 50% to 80% by mass with respect to a total amount of the composition for powder coating materials, and a content of the component (B) is 10% to 50% by mass with respect to the total amount of the composition for powder coating materials.

[6] The composition for powder coating materials according to any one of [1] to [5], in which, in a content of the component (C), a molar ratio of a functional group of the component (C) to a functional group of the component (B) is 0.5 to 1.5.

[7] The composition for powder coating materials according to any one of [1] to [6], further including a component (D): a dispersant.

[8] The composition for powder coating materials according to [7], in which a mass of the component (D) with respect to 100 parts by mass of the component (A) is 0.1 to 5.0 parts by mass.

[9] A coated article which has a surface to which a cured film formed from the composition for powder coating materials according to any one of [1] to [8] is applied.

[Advantageous Effects of Invention]

According to the composition of the present invention, a cured film having excellent thin-film smoothness, electrical insulation properties, and thermal conductivity can be obtained.

[Description of Embodiments]

The present invention relates to a composition for powder coating materials which includes a thermally conductive filler (A) that has an average circularity of 0.92 or more, a thermosetting resin (B), and a curing agent (C); and relates to a coated article having a cured film formed from the composition for powder coating materials on its surface.

Hereinafter, the component (A), the component (B), the component (C), the composition for powder coating materials, a method for producing a composition for powder coating materials, the coated article, and use applications thereof will be described.

1. Component (A)

The component (A) is a thermally conductive filler having an average circularity of 0.92 or more.

In the present invention, the average circularity means an average value of circularity calculated according to the following equation by obtaining the following L0 and L1 from a projected particle image of the thermally conductive filler photographed using a particle image analyzer.

$$\text{Circularity} = L0/L1$$

L0: A circumference of an ideal circle (true circle) having the same area as the area calculated from a projected particle image of a thermally conductive filler that is actually measured

L1: An actual circumference measured from a projected particle image of the thermally conductive filler to be measured

An average circularity of the component (A) is preferably 0.93 or more and particularly preferably 0.94 or more from the viewpoints that a filling rate with respect to the component (B) can be improved, and thermal conductivity of a cured film can be increased.

An average primary particle diameter of the component (A) is preferably 1.0 to 40 $\mu$m, more preferably 1.0 to 20 $\mu$m, and even more preferably 1.0 to 10 $\mu$m from the viewpoint that thin-film smoothness of a cured film can be improved.

In the present invention, the average primary particle diameter means a particle diameter of 50% of a volume-based frequency cumulative value in a particle diameter distribution measured by a laser diffraction/light scattering method.

A thermal conductivity of the component (A) is preferably 10 W/(m·K) or more and more preferably 20 W/(m·K) or more from the viewpoint that thermal conductivity of a cured film can be improved.

Examples of thermally conductive fillers of the present invention include a metal filler, an inorganic compound filler, a carbon filler, and the like.

Specific examples of metal fillers include silver, copper, aluminum, iron, stainless steel, and the like.

Specific examples of inorganic compound fillers include alumina, magnesia, zinc oxide, beryllia, silica, boron nitride, aluminum nitride, silicon nitride, silicon carbide, boron carbide, titanium carbide, and the like.

Specific examples of carbon fillers include graphite, carbon fibers, and the like.

Among them, an inorganic compound filler is preferable from the viewpoint that electrical insulation properties of a cured film can be improved.

Among inorganic compound fillers, alumina, magnesia, zinc oxide, beryllia, boron nitride, aluminum nitride, and silicon nitride are preferable from the viewpoint that both thermal conductivity and electrical insulation properties are high, and alumina is particularly preferable from the viewpoint that filling properties with respect to the component (B) is improved in addition to thermal conductivity and electrical insulation properties.

One kind of the component (A) may be used or two or more kinds thereof may be used in combination.

It is preferable that the component (A) include thermally conductive fillers of at least two kinds having different average primary particle diameters and the mass ratio (hereinafter referred to as a "mass ratio of maximum filler to minimum filler") of a thermally conductive filler having a largest average primary particle diameter to a thermally conductive filler having a smallest average primary particle diameter is preferably 1 to 5 and is more preferably 2 or 3 from the viewpoint that a filling rate with respect to the component (B) can be improved, and thermal conductivity of a cured film can be enhanced.

As the component (A), a surface-treated filler can be used to improve dispersibility with respect to the component (B). For example, as an inorganic compound filler, it is possible to use an inorganic compound filler of which a surface has been modified by a silane coupling agent, a titanate coupling agent and/or an aluminate coupling agent.

A content of the component (A) is preferably 50% to 80% by mass and is more preferably 60% to 80% by mass with respect to a total amount of the composition for powder coating materials from the viewpoint of excellent thermal conductivity and electrical insulation properties of a cured film.

2. Component (B)

The component (B) is a thermosetting resin and is preferably a solid at room temperature.

As the component (B), it is possible to use a thermosetting resin such as an epoxy resin (hereinafter referred to as a "component (bl)") and a polyester resin (hereinafter referred to as a "component (b2)"), and an epoxy resin is preferable from the viewpoint of its good electrical insulation properties.

Examples of the components (b1) include a bisphenol type epoxy resin, a novolak type epoxy resin, a biphenyl type epoxy resin, and the like.

Specific examples of bisphenol type epoxy resins include a bisphenol A type epoxy resin, a bisphenol F type epoxy resin, an epoxy resin obtained by polycondensation of bisphenol A, bisphenol F and epichlorohydrin, a tetrabromobisphenol A type epoxy resin, and the like.

Specific examples of novolak type epoxy resins include a phenol novolak type epoxy resin, a cresol novolak type epoxy resin, a bisphenol A novolak type epoxy resin, a bisphenol F novolak type epoxy resin, and the like.

Specific examples of biphenyl type epoxy resins include a tetramethyl biphenyl type epoxy resin and the like.

Among them, a bisphenol type epoxy resin and a novolak type epoxy resin are preferable, and a bisphenol A type epoxy resin and a cresol novolak type epoxy resin are particularly preferable from the viewpoint that mechanical properties of a cured film are excellent.

One kind of the component (b1) may be used, or two or more kinds thereof may be used in combination, and it is particularly preferable to use a bisphenol A type epoxy resin and a cresol novolak type epoxy resin in combination.

An epoxy equivalent of the component (b1) is preferably 100 to 4,000 g/eq. The epoxy equivalent is preferably 100 g/eq or more and is more preferably 200 g/eq or more from the viewpoint of excellent toughness of a cured film. In addition, the epoxy equivalent is preferably 4,000 g/eq or less and is more preferably 3,000 g/eq or less from the viewpoint of excellent melting flow properties during baking.

As the component (b2), from the viewpoint of curing properties, a hydroxyl-group-containing polyester resin containing a reaction product of a dicarboxylic acid compound (hereinafter referred to as a component (x)) and a polyhydric alcohol (hereinafter referred to as a "component (y)") is preferable.

Specific examples of the components (x) include aliphatic dicarboxylic acid compounds such as succinic acid, glutaric acid, adipic acid, pimelic acid, suberic acid, sebacic acid, azelaic acid, 1,9-nonanedicarboxylic acid, 1,10-decanedicarboxylic acid, 1,12-dodecanedicarboxylic acid, and 1,2-octadecanedicarboxylic acid; alicyclic dicarboxylic acid compounds such as 1,3-cyclohexanedicarboxylic acid, 1,4-cyclohexanedicarboxylic acid, and hexahydrophthalic acid; aromatic dicarboxylic acid compounds such as phthalic acid, isophthalic acid, terephthalic acid, naphthalenedicarboxylic acid, trimellitic acid, and pyromellitic acid; their acid anhydrides; and the like. These may be used alone or in combination of two or more kinds thereof.

Specific examples of the components (y) include dihydric alcohols such as ethylene glycol, diethylene glycol, triethylene glycol, 1,2-propanediol, 1,3-butanediol, 1,4-butanediol, 1,5-pentanediol, 1,6-hexanediol, 1,10-decanediol, 1,4-cyclohexanedimethanol, neopentyl glycol, spiro glycol, and 2-butyl-2-ethyl-1,3-propanediol; trihydric alcohols such as trimethylolpropane; tetrahydric alcohols such as pentaerythritol; and the like. These may be used alone or in combination of two or more kinds thereof.

A hydroxyl number of the component (b2) is preferably 10 to 100 mg KOH/g and is more preferably 20 to 70 mg KOH/g from the viewpoint of excellent strength of a coated film.

In the present invention, the hydroxyl number means the number of mg of potassium hydroxide equivalent to hydroxyl groups in 1 g of a sample.

One kind of the component (b2) may be used or two or more kinds thereof may be used in combination.

A softening point of the component (B) is preferably 60°C to 120°C. It is preferably 60°C or higher and is more preferably 70°C or higher from the viewpoint that then blocking of the composition for powder coating materials can be inhibited. In addition, it is preferably 130°C or lower and is more preferably 120°C or lower from the viewpoint that dispersion at the time of melt-kneading can be thoroughly performed.

A content of the component (B) is preferably 10% to 50% by mass and is more preferably 10% to 40% by mass with respect to a total amount of the composition for powder coating materials from the viewpoint of excellent thermal conductivity and electrical insulation properties of a cured film.

3. Component (C)

The component (C) is a curing agent, and as a curing agent for an epoxy resin (hereinafter referred to as a "component (c1)") or a curing agent for a polyester resin (hereinafter referred to as a "component (c2)"), known curing agents can be used.

Examples of the components (c1) include acid anhydrides, amine compounds, amide compounds, phenol compounds, and the like.

Specific examples of acid anhydrides include phthalic anhydride, maleic anhydride, tetrahydrophthalic anhydride, methyltetrahydrophthalic anhydride, methylnadic anhydride, hexahydrophthalic anhydride and methylhexahydrophthalic anhydride, trimellitic anhydride, pyromellitic anhydride, 3,3'-4,4'-benzophenonetetracarboxylic dianhydride, and the like.

Specific examples of amine compounds include diaminodiphenylmethane, diaminodiphenylethane, diaminodiphenylether, diaminodiphenylsulfone, orthophenylenediamine, metaphenylenediamine, paraphenylenediamine, metaxylenediamine, paraxylenediamine, diethyltoluenediamine, diethylenetriamine, triethylenetetramine, isophoronediamine, imidazole, BF3-amine complexes, guanidine derivatives, guanamine derivatives, and the like.

Specific examples of amide compounds include dicyandiamide and a polyamide resin synthesized from a dimer of linolenic acid and ethylenediamine, and the like.

Specific examples of phenolic compounds include bisphenol A, bisphenol F, bisphenol S, resorcinol, catechol, hydroquinone, fluorene bisphenol, 4,4'-biphenol, 4,4', 4"-trihydroxytriphenylmethane, naphthalene diol, 1,1,2,2-tetrakis(4-hydroxyphenyl)ethane, calixarene, a cresol novolak resin, an aromatic-hydrocarbon-formaldehyde-resin-modified phenolic resin, a dicyclopentadiene-phenol-addition-type resin, a phenol aralkyl resin, a phenol novolak resin, and the like.

Among them, acid anhydrides are preferable, and pyromellitic anhydrides and 3,3'-4,4'-benzophenonetetracarboxylic dianhydrides are particularly preferable from the viewpoint of improving pot life and electrical insulation properties.

One kind of the component (c1) may be used or two or more kinds thereof may be used in combination.

As a content of the component (c1), a molar ratio of a functional group of the component (c1) to an epoxy group of the epoxy resin is preferably 0.5 to 1.5 and is more preferably 0.8 to 1.3 from the viewpoint of excellent mechanical properties of a cured film.

As the component (c2), a blocked isocyanate compound that is solid at room temperature is preferable as a curing agent for a hydroxyl-group-containing polyester resin.

As the blocked isocyanate compound, a compound produced by reacting an aliphatic, aromatic, and araliphatic polyvalent isocyanate compound with a blocking agent and masking it is preferable.

Specific examples of polyvalent isocyanate compounds include divalent isocyanate compounds such as hexamethylene diisocyanate, 4,4'-methylene bis(cyclohexyl isocyanate), methylcyclohexane diisocyanate, bis(isocyanatomethyl)cyclohexane, isophorone diisocyanate, dimer acid diisocyanate, lysine diisocyanate, tolylene diisocyanate, 4,4'-diphenylmethane isocyanate, and xylylene diisocyanate; trivalent isocyanate compounds such as a trimer of hexamethylene diisocyanate and lysine triisocyanate; and the like.

Specific examples of blocking agents include alcohols such as methanol, ethanol, and benzyl alcohol, phenols such as phenol and crezone, lactams such as caprolactam and butyrolactam, oximes such as cyclohexanone, oxime, and methyl ethyl ketoxime, and the like.

As the component (c2), a compound produced by reacting a blocking agent with a polyisocyanate compound obtained by reacting an aliphatic, aromatic and araliphatic polyvalent isocyanate compound with a low molecular weight compound having active hydrogen and masking it may be used.

Specific examples of low molecular weight compounds having active hydrogen include water, ethylene glycol, propylene glycol, trimethylolpropane, glycerin, sorbitol, ethylenediamine, ethanolamine, diethanolamine, hexamethylenediamine, and the like. Examples thereof also include isocyanurate, uretidione, hydroxyl-group-containing low molecular weight polyester, polycaprolactone, and the like.

As a content of the component (c2), from the viewpoint that a cured film has excellent hardness, heat resistance, moisture resistance, and chemical resistance, a molar ratio of a functional group of the component (c2) to a hydroxyl group of the hydroxyl-group-containing polyester resin is preferably 0.5 to 1.5 and is more preferably 0.9 to 1.2.

4. Composition for powder coating materials

The composition for powder coating materials of the present invention contains the component (A), the component (B), and the component (C), but various other components can be blended in depending on the purpose.

Specific examples of other components include a dispersant (hereinafter referred to as a "component (D)"), a curing accelerating agent (hereinafter referred to as a "component (E)"), a pigment, a leveling agent, a pinhole inhibitor, and the like.

Hereinafter, these components will be described.

As the other components to be described later, only one kind of the exemplified compounds may be used, or two or more kinds thereof may be used in combination.

4-1. Component (D)

The component (D) is a dispersant and can be blended in for the purpose of improving dispersibility of the component (A).

Examples of the components (D) include a low molecular weight dispersant, a high molecular weight dispersant, and the like.

Specific examples of low molecular weight dispersants include known alkylamine compounds, amine compounds having a hydroxy group, amide compounds such as nipecotamide, isonipecotamide, and nicotinamide, and the like.

Specific examples of high molecular weight dispersants include (co)polymers of unsaturated carboxylic acid esters such as polyacrylates, (partially) amine salts of (co)polymers of unsaturated carboxylic acids such as polyacrylic acid, (partially) ammonium salts and/or (partially) alkylamine salts, (co)polymers of hydroxyl-group-containing unsaturated carboxylic acid esters such as hydroxyl-group-containing polyacrylates and/or modified products thereof, polyesters, polyurethanes, saturated polyamides, polysiloxanes, long-chain polyaminoamide phosphates, amides obtained by reacting poly(lower alkylene imine) with a free carboxyl-group-containing polyester, and/or salts thereof, and the like.

A copolymerization form of the high molecular weight dispersant may be any one of a random type, a graft type (or a "comb type"), or a block type.

As a functional group of the high molecular weight dispersant, the dispersant may have an acidic group or a basic group.

Commercially available high molecular weight dispersants include "BYK (registered trademark)-3950P," "BYK-3951P," "BYK-3-3955P," "DISPERBYK (registered trademark)-2055," and "DISPERBYK-2200" manufactured by BYK Japan KK; "Solplus (registered trademark) L-300," "Solplus L-400," "Solsperse (registered trademark) 12000," "Solsperse 24000GR," "Solsperse 24000SC," "Solsperse 26000," and "Solsperse 32000," manufactured by Lubrizol Japan Ltd.; "Ajisper (registered trademark) PB821," "Ajisper PB822," "Ajisper PB824," and "Ajisper PB881" manufactured by Ajinomoto Fine-Techno Co., Inc.; and the like.

The component (D) is preferably a high molecular weight dispersant, is more preferably a comb-type high molecular weight dispersant, and is particularly preferably a comb-type high molecular weight dispersant having an acidic group or a basic group from the viewpoint of excellent dispersibility of the component (A) and excellent thin-film smoothness of a cured film.

A content of the component (D) is preferably 0.1 to 10.0 parts by mass, is more preferably 0.1 to 5.0 parts by mass, and is particularly preferably 0.1 to 2.0 parts by mass with respect to 100 parts by mass of the component (A) from the viewpoint that then dispersibility of the component (A) is excellent and thin-film smoothness of a cured film is excellent.

4-2. Component (E)

The component (E) is a curing accelerating agent and can be blended in for the purpose of accelerating curing of the component (B) and obtaining an excellent cured film strength.

Examples of the components (E) include a phosphorus compound, a tertiary amine compound, and an imidazole compound in a case where the component (B) is the component (b1).

Specific examples of phosphorus compounds include primary phosphines such as ethylphosphine and phenylphosphine, secondary phosphines such as dimethylphosphine and diphenylphosphine, and tertiary phosphines such as triethylphosphine and triphenylphosphine, and the like.

Specific examples of tertiary amine compounds include aliphatic amines such as dimethylaminohexanol; alicyclic and heterocyclic amines such as 1,8-diazabicyclo-[5.4.0]-7-undecene and 1,5-diazabicyclo-[5.4.0]-5-nonene; aromatic amines such as dimethylbenzylamine; and the like.

Specific examples of imidazole compounds include 2-phenylimidazole, 1-cyanoethyl-2-ethyl-4-methylimidazole, 2-ethyl-4-methylimidazole, and the like.

Among them, triphenylphosphine and 1,8-diazabicyclo-[5.4.0]-7-undecene are preferable, and triphenylphosphine is more preferable from the viewpoint of excellent curability of the component (b1).

Examples of the components (E) include a tin catalyst in a case where the component (B) is the component (b2).

Specific examples of tin catalysts include tin octylate, tributyltin laurate, dibutyltin dilaurate, a di-normal butyltin malate polymer, and the like.

One kind of the component (E) may be used or two or more kinds thereof may be used in combination.

A content of the component (E) is preferably 0.01 to 5.0 parts by mass and is more preferably 0.01 to 3.0 parts by mass with respect to 100 parts by mass of a total amount of the component (B) and the component (C) from the viewpoint that both a catalytic effect and a pot life can be achieved.

5. Method for producing composition for powder coating materials

The composition for powder coating materials of the present invention can be produced by a known method.
Specific examples of methods include methods (1) to (3) to be described below.
A method (1) in which the components (A) to (C) and, if necessary, the components (D) to (E), a pigment, a leveling agent, and a pinhole inhibitor (hereinafter collectively referred to as "raw materials") are respectively pulverized into a powder in advance and then mixed.
A method (2) of pulverizing raw materials into a powder after mixing them in a solid state.
A method (3) in which raw materials are mixed in a solid state, and then melt-kneaded, cooled to form a solid mass, and pulverized into a powder.
The method (3) is preferable because the respective components are uniformly distributed in the obtained powder, whereby a resulting cured film is excellent in homogeneity.
Mixing of the raw materials in a solid state can be performed using a mixer such as a high-speed mixer, a V-type mixer, an inversion mixer, or the like.
The melt-kneading can be performed using various types of extruders such as a single screw, a twin screw, and a planetary gear. A mixture of the respective components is kneaded in a heated and melted state to make the respective components uniform. It is preferable to cool the extruded melt-kneaded product to make it into pellets.
Pulverization of the pellets can be performed using a pulverizer such as a pin mill, a hammer mill, and a jet mill. After pulverization, it is preferable to use a cyclone and a classifier (vibrating sieve or the like) to make a uniform particle diameter range (hereinafter referred to as classification). In a case of performing classification, it is preferable to remove at least one of fine powder having a particle diameter of less than 5 μm and coarse powder having a particle diameter of more than 150 μm.

6. Coated article

The coated article of the present invention has a cured film formed from the composition for powder coating materials on the surface of a substrate.

Examples of materials of the substrate include metals such as iron, steel, copper, and aluminum, alloys of the metal, materials obtained by surface-treating the metal or the alloy, and the like. In addition, examples thereof include a structure in which a mechanical part, an electric circuit, or the like containing materials other than metal is partially incorporated.

Examples of shapes of the substrate include a plate shape, a fin shape, a rod shape, a coil shape, and the like, but examples are not particularly limited.

A size of the substrate is not particularly limited, and it may be appropriately set according to use applications.

[Method for producing coated article]

The coated article of the present invention is preferably produced by coating a substrate with the composition for powder coating materials of the present invention, forming a coated film made of a melt of the composition on the substrate, reacting reactive components in the composition, and then, cooling the cured film in a molten state to room temperature to solidify.

A melt film made of a melt of the composition for powder coating materials may be formed at the same time with the coating of the substrate with the composition, or may be formed by heating and melting a powder on the substrate after the powder of the composition is adhered to the substrate.

Because a curing reaction of the reactive components in the composition starts almost at the same time when the composition for powder coating materials is heated and melted, it is necessary that heating and melting of the composition be performed almost at the same time as adhesion of the composition to the substrate, or heating and melting of the composition be performed after adhesion of the composition to the substrate.

When the composition for powder coating materials is heated and melted, a heating temperature (hereinafter referred to as a "baking temperature") and a heating maintaining time (hereinafter referred to as a "baking time") which are for maintaining a molten state for a predetermined time are appropriately set depending on the type and composition of raw material components of the composition for powder coating materials, a desired thickness of a cured film, and the like. In particular, a baking temperature is preferably about 160°C to 220°C. A baking time is preferably 1 second to 120 minutes and is more preferably 1 to 60 minutes.

A film thickness of a cured film is usually 20 to 700 $\mu$m, is preferably 200 $\mu$m or less, and is more preferably 150 $\mu$m or less from the viewpoint of achieving the effects of the present invention.

[Coating method]

Examples of coating methods include an electrostatic coating method, an electrostatic spraying method, an electrostatic dipping method, a spraying method, a fluid dipping method, an air blasting method, a spraying method, a thermal spraying method, a plasma spraying method, and the like. The electrostatic coating method using a powder coating gun is preferable from the viewpoint of excellent thin-film smoothness of a molten film and excellent concealability of a cured film.

Examples of powder coating guns include a corona charge type coating gun and a frictional charge type coating gun. The corona charge type coating gun is a gun for spraying a powder coating material that has been subjected to corona discharge treatment. The frictional charge type coating gun is a gun for spraying a powder coating material that has been subjected to frictional charge treatment.

A discharge amount of the powder coating material from the powder coating gun is preferably 50 to 200 g/min.

A distance from the tip of the gun portion of the powder coating gun to the substrate is preferably 100 to 400 mm from the viewpoint of coating efficiency.

In a case where the corona charge type coating gun is used, an application voltage applied to components constituting the powder coating material by the corona discharge treatment is preferably -20 to -100 kV, and is preferably -50 to -80 kV from the viewpoint of excellent coating efficiency (a proportion of the powder coating material adhering to the substrate) and excellent appearance of a cured film.

In a case where the frictional charge type coating gun is used, an internally generated current value of the powder coating material by the frictional charge treatment is preferably 1 to 8 $\mu$A from the viewpoint of excellent coating efficiency and appearance of a cured film.

In a case where the electrostatic coating method is carried out industrially, for example, an unpainted substrate is installed, a grounded conductive horizontal belt conveyor for grounding is laid in a coating chamber, and a gun is installed at the top of the coating chamber. A coating pattern width is preferably 50 to 500 mm, an operation speed of the gun is preferably 1 to 30 m/min, a conveyor speed is preferably 1 to 50 m/min, and conditions suitable for the purpose may be selected from the above range.

7. Use applications

The coated article formed from the composition of the present invention can be used in various industrial product fields such as electrical and electronic fields.

In particular, specific examples of preferable use applications include lighting devices such as LED lighting and organic EL lighting, semiconductor modules, electronic circuit boards such as printed wiring boards and flexible wiring boards, electric rotating equipment such as small motors and in-vehicle motors, power supply equipment such as transformers, power storage devices such as lithium batteries, power generation equipment such as solar panels, and the like.

Examples

Hereinafter, the present invention will be described in more detail with reference to Examples and Comparative Examples.

1. Examples 1 to 7 and Comparative Examples 1 and 2

1) Preparation of composition for powder coating materials

Compounds shown in Table 1 were mixed in parts by mass shown in Table 1 using a high-speed mixer, and then were melt-kneaded and cooled to form a solid mass. This was pulverized into a powder using a hammer mill, and thereby a composition for powder coating materials was prepared.

Evaluation was performed as described below using the obtained composition. The results are shown in Table 1.

Numbers in Table 1 indicate parts by mass.

In addition, abbreviations in Table 1 are as follows.

- YD013: Bisphenol A type epoxy resin (epoxy equivalent: 850, softening point: 95°C), Epotohto (registered trademark) YD-013 manufactured by Nippon Steel & Sumikin Chemical Co., Ltd.
- YDCN704: o-Cresol novolak type epoxy resin (epoxy equivalent: 650, softening point: 90°C), Epotohto (registered trademark) YDCN-704 manufactured by Nippon Steel & Sumikin Chemical Co., Ltd.
- TMTAC: Trimellitic anhydride, Rikacid (registered trademark) TMTA-C manufactured by New Japan Chemical Co., Ltd.
- TPP: Triphenylphosphine, PP-360 manufactured by K.I Chemical Industry Co., Ltd.
- AS50: Alumina (average primary particle diameter: 9 $\mu$m), AS-50 manufactured by Showa Denko K.K.
- AR60: Alumina (average primary particle diameter: 3 $\mu$m), AR-60 manufactured by Showa Denko K.K.
- CBP10: Alumina (average primary particle diameter: 8 $\mu$m), CB-P10 manufactured by Showa Denko K.K.
- CBP02: Alumina (average primary particle diameter: 2 $\mu$m), CB-P02 manufactured by Showa Denko K.K.
- V325F: Alumina (average primary particle diameter: 12 $\mu$m), V325F manufactured by Nippon Light Metal Co., Ltd.
- SA34: Alumina (average primary particle diameter: 4 $\mu$m), SA34 manufactured by Nippon Light Metal Co., Ltd.
- L400: Comb-type high molecular weight dispersant having a basic group, Solplus L-400 manufactured by Lubrizol Japan Ltd.
- L300: Comb-type high molecular weight dispersant having an acidic group, Solplus L-300 manufactured by Lubrizol Japan Ltd.
- 20L: Carbon Black, High Black 20L manufactured by Orion Engineered Carbons S.A.
- RL4: Acrylic leveling agent, Resimix (registered trademark) RL-4, manufactured by Mitsui Chemicals, Inc.

2) Measurement of average circularity of thermally conductive filler

Regarding an average circularity of the thermally conductive filler shown in Table 1, an average value of circularity calculated according to the following equation by obtaining the following L0 and L1 from a projected particle image of the thermally conductive filler photographed using a particle image analyzer (trade name FPIA-3000, manufactured by Sysmex Corporation) was measured.

$$\text{Circularity} = L0/L1$$

L0: A circumference of an ideal circle (true circle) having the same area as the area calculated from a projected particle image of a thermally conductive filler that is actually measured

L1: An actual circumference measured from a projected particle image of the thermally conductive filler to be measured

The results are shown below.

- Average circularity of AS50: 0.93
- Average circularity of AR60: 0.93
- Average circularity of CBP10: 0.94
- Average circularity of CBP02: 0.94
- Average circularity of V325F: 0.91
- Average circularity of SA34: 0.91

3) Production of coated article

Using the composition for powder coating materials obtained in the above section 1.1), one surface of a cold-rolled steel sheet (hereinafter referred to as a "steel sheet") that had been chemically treated with zinc phosphate was subjected to electrostatic coating using an electrostatic coating machine (trade name: GX7500C, manufactured by Nihon Parkerizing Co., Ltd.), left to stand in a 200°C atmosphere for 15 minutes, and then was left to cool to room temperature, and thereby a steel sheet to which a cured film having an average film thickness of 60 μm (hereinafter referred to as a "coated steel sheet") was attached was obtained.

4) Evaluation of composition for powder coating materials

The following evaluation was performed using the composition for powder coating materials obtained in the above section 1.1).

(1) Melting flow properties

1.0 g of the composition for powder coating materials obtained in the above section 1.1) was press-molded into tablet-shaped pellets (diameter 16 mm), and the pellets were melted on a steel plate heated to 160°C for 10 minutes. A pellet diameter after melting for 10 minutes was measured, and a horizontal flow rate was calculated according to the following formula.

$$\text{Horizontal flow rate (\%)} = (D - 16)/16 \times 100$$

D: Pellet diameter (mm) after melting for 10 minutes

As a horizontal flow rate became larger, melting flow properties of the composition for powder coating materials became excellent, and evaluation was performed according to the following five standards. The evaluation results are shown in Table 1.

◎: A horizontal flow rate was 5.0% or more

○: A horizontal flow rate was 1.0% or more and less than 5.0%

Δ: A horizontal flow rate was 0.5% or more and less than 1.0%

X: A horizontal flow rate was 0.1% or more and less than 0.5%

XX: A horizontal flow rate was less than 0.1%

5) Evaluation of coated steel sheet

Using the coated steel sheet obtained in the above section 1.2), the following evaluation was performed.

(1) Thin-film smoothness

Smoothness of the surface of the coated steel sheet was visually observed and evaluated according to the following four standards. The results are shown in Table 1.

◎: Extremely favorable

○: Favorable

△: Slightly poor

X: Very poor

(2) Electrical insulation properties

Dielectric breakdown strength of the coated steel sheet was measured using a pressure tester (trade name TOS8700 manufactured by Kikusui Electronics Corp.) at a direct current and a boosting rate of 1 kV/sec, and evaluation was performed according to the following five standards. The results are shown in Table 1.

◎: 50 kV/mm or more

○: 10 kV/mm or more and less than 50 kV/mm

△: 1 kV/mm or more and less than 10 kV/mm

X: Less than 1 kV/mm

XX: Measurement was not possible due to cured film defects

(3) Thermal conductivity

Thermal conductivity of the coated steel sheet was measured using a xenon flash analyzer (trade name LFA-467 manufactured by NETZSCH Japan K.K.) and evaluated according to the following five standards. The results are shown in Table 1.

◎: 1.0 W/(m·K) or more
○: 0.5 W/(m·K) or more and less than 1.0 W/(m·K)
△: 0.1 W/(m·K) or more and less than 0.5 W/(m·K)
X: Less than 0.1 W/(m·K)
XX: Measurement was not possible due to cured film defects

[Table 1]

| | | | Examples | | | | | | | Comparative Examples | |
|---|---|---|---|---|---|---|---|---|---|---|---|
| | | | 1 | 2 | 3 | 4 | 5 | 6 | 7 | 1 | 2 |
| | (A) | AS50 | 325 | 225 | 325 | 225 | | 225 | 225 | | |
| | | AR60 | | 100 | | 100 | | 100 | 100 | | |
| | | CBP10 | | | | | 225 | | | | |
| | | CBP02 | | | | | 100 | | | | |
| | | V325F | | | | | | | | 325 | 225 |
| | | SA34 | | | | | | | | | 100 |
| | (B) | YD013 | 90 | 90 | 90 | 90 | 90 | 90 | 90 | 90 | 90 |
| | | YDCN704 | 10 | 10 | 10 | 10 | 10 | 10 | 10 | 10 | 10 |
| | (C) | TMTAC | 30 | 30 | 30 | 30 | 30 | 30 | 30 | 30 | 30 |
| | (D) | L400 | | | 3 | 3 | 3 | 9 | | | 3 |
| | | L300 | | | | | | | 3 | | |
| | (E) | TPP | 0.1 | 0.1 | 0.1 | 0.1 | 0.1 | 0.1 | 0.1 | 0.1 | 0.1 |
| | | 20L | 0.5 | 0.5 | 0.5 | 0.5 | 0.5 | 0.5 | 0.5 | 0.5 | 0.5 |
| | | RL4 | 1.5 | 1.5 | 1.5 | 1.5 | 1.5 | 1.5 | 1.5 | 1.5 | 1.5 |
| Content of component (A) (% by mass) | | | 71.1 | 71.1 | 70.6 | 70.6 | 70.6 | 69.7 | 70.6 | 71.1 | 70.6 |
| Mass ratio of maximum filler to minimum filler | | | - | 2.25 | - | 2.25 | 2.25 | 2.25 | 2.25 | - | 2.25 |
| Content of component (D) (Parts by mass with respect to 100 parts by mass of component (A)) | | | 0 | 0 | 0.9 | 0.9 | 0.9 | 2.8 | 0.9 | 0 | 0.9 |

| | | | | Examples | | | | | | | Comparative Examples | |
|---|---|---|---|---|---|---|---|---|---|---|---|---|
| | | | | 1 | 2 | 3 | 4 | 5 | 6 | 7 | 1 | 2 |
| Evaluation results | Composition | Melting flow properties | Determination | ○ | ○ | ◎ | ◎ | ◎ | ○ | ○ | X | Δ |
| | | | Horizontal flow rate | 1.8 | 1.1 | 8.2 | 10.4 | 6.7 | 2.4 | 3.8 | 0.4 | 0.7 |
| | Cured film | Thin-film smoothness | Determination | Δ | Δ | ○ | ◎ | ◎ | ○ | ○ | X | X |
| | | Electrical insulation properties | Determination | ◎ | ◎ | ◎ | ◎ | ◎ | ◎ | ◎ | XX | XX |
| | | | Dielectric breakdown strength (kV/mm) | > 50 | > 50 | > 50 | > 50 | > 50 | > 50 | > 50 | Measurement was not possible due to cured film defects | Measurement was not possible due to cured film defects |
| | | Thermal conductivity | Determination | ○ | ○ | ◎ | ◎ | ◎ | ○ | ◎ | XX | XX |
| | | | Thermal conductivity (W/(m·K)) | 0.8 | 0.9 | 1.2 | 1.3 | 1.0 | 0.9 | 1.3 | Measurement was not possible due to cured film defects | Measurement was not possible due to cured film defects |

5) Evaluation results

As can be clearly seen from the results of Examples 1 to 7, the composition of the present invention was excellent in all physical properties of thin-film smoothness, electrical insulation properties, and thermal conductivity as a cured film.

On the other hand, the compositions of Comparative Examples 1 and 2 were compositions including a thermally conductive filler that does not satisfy the requirement for circularity of the component (A), and when they were compared with the compositions of Examples, the cured film had very poor thin-film smoothness, and the cured film was defective to the extent that electrical insulation properties and thermal conductivity could not be measured. Therefore, they are not practical.

[Industrial Applicability]

The present invention relates to a composition for powder coating materials and a coated article, and the coated article formed from the composition of the present invention can be used in various industrial product fields such as the electrical and electronic fields. In particular, it can be preferably used in lighting devices such as LED lighting and organic EL lighting, semiconductor modules, electronic circuit boards such as printed wiring boards and flexible wiring boards, electric rotating equipment such as small motors and in-vehicle motors, power supply equipment such as transformers, power storage devices such as lithium batteries, power generation equipment such as solar panels, and the like.

**Claims**

1.  A composition for powder coating materials, comprising:

    a component (A): a thermally conductive filler that has an average circularity of 0.92 or more;
    a component (B): thermosetting resin; and
    a component (C): curing agent.

2.  The composition for powder coating materials according to claim 1, wherein the component (A) comprises thermally conductive fillers of at least two kinds having different average primary particle diameters, and a mass ratio of a thermally conductive filler having a largest average primary particle diameter to a thermally conductive filler having a smallest average primary particle diameter is 1 to 5.

3.  The composition for powder coating materials according to claim 1 or 2, wherein the component (B) is an epoxy resin.

4.  The composition for powder coating materials according to any one of claims 1 to 3, wherein an average primary particle diameter of the component (A) is 1.0 to 40 $\mu$m.

5.  The composition for powder coating materials according to any one of claims 1 to 4, wherein a content of the component (A) is 50% to 80% by mass with respect to a total amount of the composition for powder coating materials, and a content of the component (B) is 10% to 50% by mass with respect to the total amount of the composition for powder coating materials.

6.  The composition for powder coating materials according to any one of claims 1 to 5, wherein, in a content of the component (C), a molar ratio of a functional group of the component (C) to a functional group of the component (B) is 0.5 to 1.5.

7.  The composition for powder coating materials according to any one of claims 1 to 6, further comprising a component (D): a dispersant.

8.  The composition for powder coating materials according to claim 7, wherein a mass of the component (D) with respect to 100 parts by mass of the component (A) is 0.1 to 5.0 parts by mass.

9.  A coated article which has a surface to which a cured film formed from the composition for powder coating materials according to any one of claims 1 to 8 is applied.

## INTERNATIONAL SEARCH REPORT

| | International application No. |
|---|---|
| | PCT/JP2018/031905 |

**A. CLASSIFICATION OF SUBJECT MATTER**
Int.Cl. C09D201/00(2006.01)i, C09D5/03(2006.01)i, C09D7/61(2018.01)i, C09D163/00(2006.01)i

According to International Patent Classification (IPC) or to both national classification and IPC

**B. FIELDS SEARCHED**

Minimum documentation searched (classification system followed by classification symbols)
Int.Cl. C09D201/00, C09D5/03, C09D7/61, C09D163/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-226538 A (SUMITOMO DUREZ CO., LTD.) 15 August 2000, claims, paragraphs [0001], [0005], [0009]-[0010], [0015]-[0025], examples 1-4 (Family: none) | 1-9 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 October 2018 (04.10.2018) | 23 October 2018 (23.10.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/031905 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2017-109193 A (FUJI XEROX CO., LTD.) 22 June 2017, claims, paragraphs [0001], [0015], [0090], examples 1-6 & US 2017/0173626 A1, claims, paragraphs [0003], [0013], [0139]-[0140], examples 101-106 | 1-9 |
| A | JP 2013-166667 A (SHIN-ETSU CHEMICAL CO., LTD.) 29 August 2013, claims, paragraph [0057], synthesis example 2 (Family: none) | 1-9 |
| A | WO 2016/133010 A1 (DAIKIN INDUSTRIES, LTD.) 25 August 2016, claims, paragraph [0083], examples 1-25 & US 2018/0016461 A1, claims, paragraph [0094], examples 1-25 & EP 003260508 A1 & CN 107207892 A & KR 10-2017-0102339 A | 1-9 |
| A | JP 2010-132794 A (SUMITOMO BAKELITE CO., LTD.) 17 June 2010, claims, examples 1-3 (Family: none) | 1-9 |
| A | WO 2011/046179 A1 (SUNSTAR INC.) 21 April 2011, paragraphs [0015], [0018], [0022] & US 2014/0199355 A1, paragraphs [0043], [0045], [0049] & CN 102655842 A | 1-9 |
| A | シリカ・アルミナ球状微粒子, 新日鐵技報[online], 383, October 2005, [retrieval date 04 October 2018], internet :<URL:http://www.nssmc.com/tech/report/nsc/pdf/38315.pdf>, page 32, ("Silica and Alumina Spherical Micro Powder", Shinnittetsu giho) | 1-9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56079161 A

- JP 2014237805 A